# EUROPEAN PATENT APPLICATION

(11) **EP 1 071 287 A2**
(43) Date of publication of application: **24.01.2001**
(21) Application number: 00305841.9
(22) Date of filing: 11.07.2000
(51) Int. Cl.: H04N 7/173

(54) **Television advertisement delivery system and method**

(30) Priority: 19.07.1999 US 356979
(71) Applicant: LUCENT TECHNOLOGIES INC., Murray Hill, New Jersey 07974-0636 (US)
(72) Inventor: Blahut, Donald Edgar, Holmdel, New Jersey 07733 (US); Rosenthal, Eugene J., Edison, New Jersey 08817 (US)
(74) Representative: Watts, Christopher Malcolm Kelway, Dr.

(57) **Abstract**

An advertisement delivery system employs an advertisement delivery service that discourages viewers from channel surfing. To this end, advertisers agree to pay at least a portion, if not all, of the consumer's premium video services charges, if in turn, the consumer agrees to watch the advertisements targeted to him/her as a function of an agreed upon interest profile. Viewers and advertisers subscribe to the advertisement delivery service, and deliver specific advertisements to a subscriber as a function of, for example, the particular household it is being delivered to, type of program, time of day, day of the week, a subscriber's interest profile or the like. To this end, television programming and advertisements are supplied to subscribers from a central video server that is informed when a subscriber has made a change in the channel being viewed. Additionally, the video server can insert point-to-point advertisements, i.e., insert different advertisements directed toward different viewers or groups of views, even if the program to be viewed is a broadcast program. Channel surfing is discouraged in one embodiment of the invention by supplying the same advertisement in the same commercial interval to all the subscribed channels for a particular subscriber. In another embodiment of the invention, when channel surfing is initiated while an advertisement is playing, the advertisement playout is "paused" until the subscriber returns to the original channel that was being viewed. Once the subscriber returns to the original channel, the playing out of the advertisement is automatically resumed. In still another embodiment of the invention, the subscriber is controllably inhibited from selecting a channel other than the one presently being viewed during the commercial intervals.

## Description

### Technical Field

This invention relates to the delivery of television programming and, more particularly, to the delivery of television advertisements.

### Background Of The Invention

Advertisements are inserted into television programs during commercial intervals for national consumption or for local consumption. In either situation it has become a common practice for television viewers to channel "surf", i.e., switch from channel-to-channel, during the commercial intervals. Channel surfing is possible or made "desirable" because commercial intervals may occur at different times on different channels and some channels do not play any commercials at all. Reasons for this so-called "channel surfing" are the advertisements are not of interest to the viewer and there is no incentive or motivation for the viewer to watch the advertisement. This channel surfing is extremely undesirable and cost ineffective from an advertiser's point of view. Moreover, while channel surfing, the viewer may become more interested in some other program and may not return to the original program he/she was viewing.

### Summary Of The Invention

These and other problems and limitations of prior known advertisement delivery systems are addressed by employing an advertisement delivery service that discourages viewers from channel surfing. To this end, advertisers agree to pay at least a portion, if not all, of the consumer's video services charges, if in turn, the consumer agrees to watch the advertisements targeted to him/her as a function of an agreed upon interest profile. Viewers and advertisers subscribe to the advertisement delivery service that delivers specific advertisements to a viewer as a function of, for example, the particular household it is being delivered to, type of program, time of day, day of the week, a subscriber's interest profile or the like. To this end, television programming and advertisements are supplied to subscribers from a central video server that is informed when a subscriber has made a change in the channel being viewed. Additionally, the video server can insert point-to-point advertisements, i.e., insert different advertisements directed toward different viewers or groups of views, even if the program to be viewed is a broadcast program.

Channel surfing is discouraged in one embodiment of the invention by supplying the same advertisement in the same commercial interval to all the subscribed channels for a particular subscriber.

In another embodiment of the invention, when channel surfing is initiated while an advertisement is playing, the advertisement playout is "paused" until the subscriber returns to the original channel that was being viewed. Once the subscriber returns to the original channel, the playing out of the advertisement is automatically resumed.

In still another embodiment of the invention, the subscriber is controllably inhibited from selecting a channel other than the one presently being viewed during the commercial intervals.

### Brief Description Of The Drawing

FIG. 1 shows, in simplified block diagram form, a video distribution system employing an embodiment of the invention;
FIG. 2 shows, in simplified block diagram form, details of a video server employed in the embodiment of FIG. 1;
FIG. 3 shows, in simplified block diagram form, details of a video storage server employed in the video server of FIG.2;
FIG. 4 shows, in simplified block diagram form, details of a centralized video controller employed in practicing the invention that may be used in the system of FIG. 1;
FIG. 5 shows, in simplified block diagram form, details of a remote control unit that may be employed with the video controller of FIG 4;
FIG. 6 shows, in simplified block diagram form, details of another centralized video controller that may be employed in the system of FIG. 1;
FIG. 7 shows, in simplified block diagram form, details of a remote control unit that may be employed with the video controller of FIG. 6;
FIG. 8 is a flow chart illustrating the steps in unicast playing a selected video program contained in the video server of FIG. 2, periodically inserting advertisements;
FIG. 9 is a flow chart illustrating the steps in playing a video program contained in the video server of FIG. 2, periodically inserting advertisements, inhibiting attempts to change the video program being viewed when advertisements are being played;
FIG. 10 is a flow chart illustrating the steps in unicast playing a video program contained in the video server of FIG. 2, periodically inserting advertisements, in which the video program belongs to a predetermined group associated with a particular advertisement to be viewed;
FIG. 11 is a flow chart illustrating the steps in playing a video program contained in the video server of FIG.2 which is being recorded as it is played; and
FIG. 12A and FIG. 12B, when connected A-A, B-B and C-C, show a flow chart illustrating the steps in playing a video program contained in the video server of FIG. 2, periodically inserting advertisements, in which if a different program is selected during the playing of an advertisement, playing of the advertisement is resumed upon the program being changed.

### Detailed Description

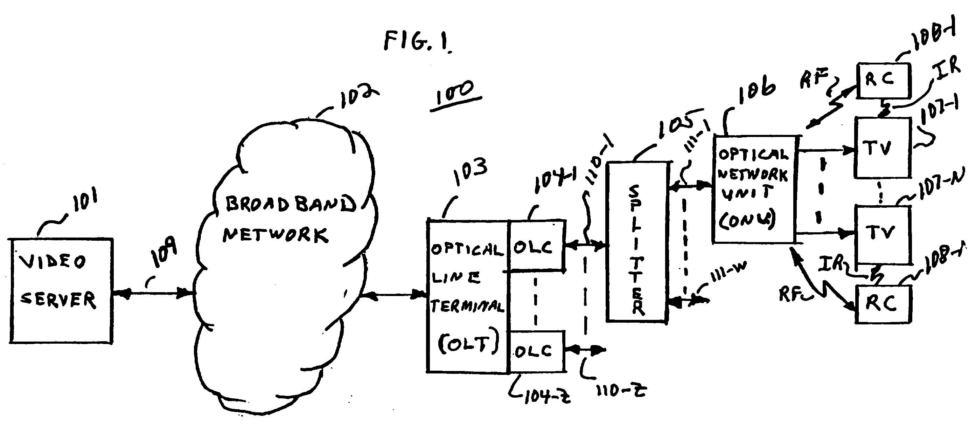

FIG. 1 shows, in simplified block diagram form, a video distribution system employing an embodiment of the invention. Specifically, shown is network 100 including video server 101 which supplies down-stream video signals to broadband network 102, in response to an up-stream communication including a selection message. Broadband network 102 supplies the communications signals to and from optical line terminal 103. At optical line terminal (OLT) 103, optical line circuit (OLC) 104 interfaces to an optical fiber line. The optical fiber line is, for example, a power splitting passive optical network (PSPON) fiber including optical fibers 110 and 111 on which optical signals are transmitted using coarse wavelength division multiplexing. Transmission on the fiber lines 110 and 111 is achieved using two wavelengths, 1550 nano meters (nm) down-stream, for example, to a home and 1310 nm up-stream, for example, from the home. The PSPON fibers 110 may be split via passive splitter 105 into a prescribed number of optical fibers 111, for example, 32 fibers 111, thereby interfacing via associated ONUs 106 with 32 locations. Note that OLT 103 serves one or more OLCs 104, namely, 104-1 through 104-Z, coupled to a corresponding number of fiber lines, namely, 110-1 through 110-Z, respectively, and that an OLC 104 serves one or more ONUs 106 via optical fibers 111-1 through 111-W. In this example, the down-stream transmission of video signals is in asynchronous transfer mode (ATM) cells via time division multiplex (TDM), while up-stream transmission of communication is via time division multiple access (TDMA), and both down-stream and up-stream communications is at 155.52 Mb/sec. Efficient TDMA communications in the up-stream direction requires all optical network units (ONUs) 106 to have equal loop delay in relationship to their associated OLC 104. This is realized by employing a ranging procedure that is executed when each ONU 106 associated with a particular OLC 104 is installed, moved, returned to service, or the like. This is realized by employed a ranging procedure that is executed when each ONU 106 is installed. The ranging procedure defines an artificial delay that when added to the transmission loop delay of an ONU 106 yields the required common loop delay. Such ranging arrangements are known in the art. However, a preferred ranging arrangement is described in co-pending United States Patent application Serial No. (D. E. Blahut-P. Magill Case 46-20) filed concurrently herewith and assigned to the assignee of this application.

Actually, OLT 103 is a special ATM switch including a traditional ATM fabric and input/output (I/O) ports. In this example, two types of I/O boards are required, namely, standard SONET (synchronous optical network) boards, e.g., OC-12 units, and OLC units 104. Video signals received from OLT 103 as ATM cells from one or more SONET boards are distributed to the OLC units 104. Because of this, up-stream channel select messages being sent to video services controller 202 in video server 101 are intercepted within the OLT 103, which accumulates the number of viewers of each video program that is OLT 103 wide. Only channel (program) selections that are not available within presently received SONET VCs are passed on to the video services controller 202 in video server 101. Additionally, messages are sent by OLT 103 to video server 101 and, therein, to video services controller 202 whenever a transmitted video program is no longer being viewed by any OLT 103 supported TV 107. It is noted that each of OLC units 104 includes, in this example, a CPU and memory (not shown) that may be a microprocessor with memory.

Optical network unit (ONU) 106 terminates the PSPON fiber 110 via an associated PSPON optical fiber 111, and provides appropriate interfaces, in this example, to one or more television sets (TVs) 107-1 through 107-N. Each of TVs 107-1 through 107-N has an associated one of remote control (RC) units 108-1 through 108-N, respectively.

Network 100 supplies, for example, via one or more video services controller 202 in video server 101 in response to specific program requests, conventional broadcast TV programs, programs similar to those supplied via cable TV providers, satellite TV providers, video on demand and the like. Procedures for requesting and transmitting video programs are described in greater detail below.

As shown in FIG. 1, a residential video subsystem includes an ONU 106 and one or more TVs 107 and associated RC units 108. In this example, ONU 106 and TVs 107 are interconnected via coaxial (COAX) cable.

This embodiment of the invention will be described in terms of a video server 101 for an interactive television system. Video programs can be material such as movies, musical selections, interactive television presentations, commercial broadcast programming, CATV or the like, and commercials that can involve selection and presentation of single or multiple program elements to a user. The video server 101 is responsive to requests from users. Such requests may simply be requests for presentation of a particular program element or group of elements; however, in interactive applications, requests may involve responses from a user to other elements. In general, the video server 101 sends data blocks over multiple channels in the form of digital packets sent at intervals appropriate to the data rate needed for the particular program elements and, in this embodiment, using ATM cells transmitted over 109 (FIG. 1). It will be clear to those skilled in the art that the methods and apparatus of the invention can be used in connection with any kind of data and not just for the program and commercial elements described herein.

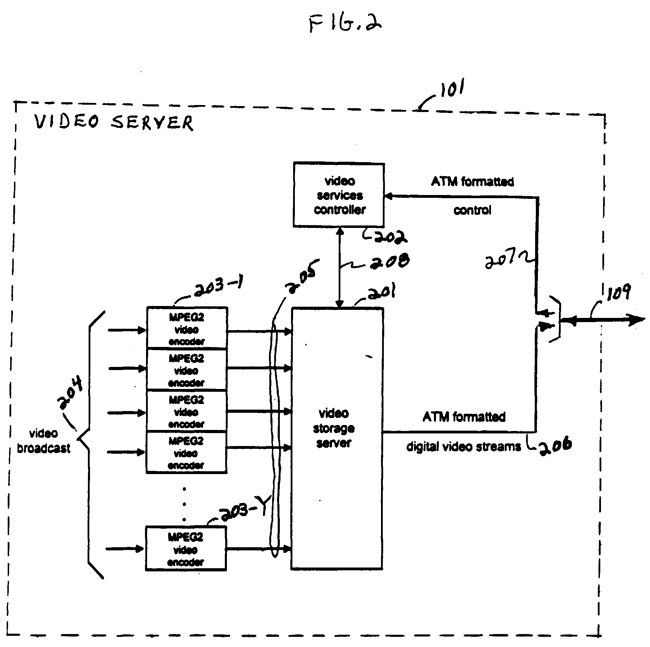

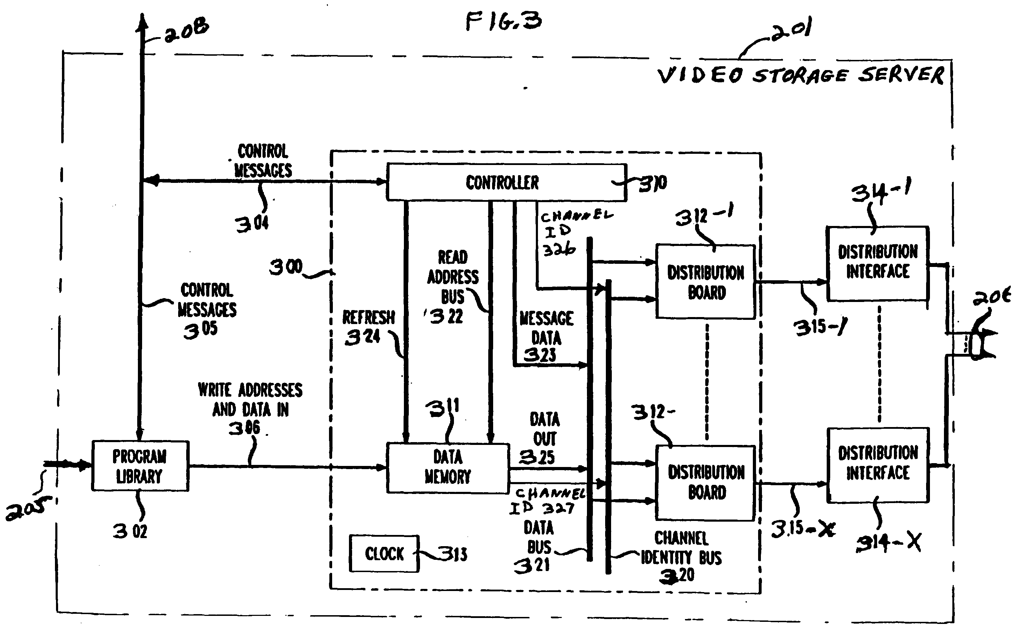

FIG. 2 is a simplified block diagram of video server 101 employed in the system of FIG. 1. Specifically, shown are video storage server 201, video services controller 202 and a block of MPEG2 video encoders 203-1 through 203-Y. Broadcast video signals are received via inputs 204-1 through 204-Y and supplied on a one-to-one basis to MPEG2 video encoders 203-1 through 203-Y, respectively, where they are digitally encoded and compressed in now well known fashion. Thereafter, the digitally encoded MPEG2 video signals are supplied to video storage server 201. As described below in relationship to FIG. 3, video storage server 201 stores the digitally encoded MPEG2 video signals to be transmitted to subscribers. The transmission of the digitally encoded MPEG2 video signals is in response to control signals from a subscriber and supplied, in this example, via TDMA in ATM cells over transmission link 109 to video server 101 and, therein, via 207 to video services controller 202. In turn, video services controller 202 supplies/and or receives control signals to and/or from video storage server 201. In response to subscriber requests video storage server 201 supplies appropriate video signals including advertisements during commercial intervals or in accordance with the service being provided to one or more subscribers. The video signals are included in ATM cells and formatted as an ATM signal for transmission. Thereafter, the ATM formatted signal is supplied as an output from video server 201 via 206 to bi-directional transmission link 109.

In operation, video server 101 delivers all video signals as MPEG2 encoded video signals. As described above, FIG. 2 shows a block diagram of the video server 101 consisting of a bank of MPEG2 video encoders 203, a video storage server 201, and a video services controller 202. In order to deliver customized advertisement insertion services, all encoded broadcast video signals are delivered through the video storage server 201. Therefore, each digital video signal stream is written to the video storage server 201 in real time, as well as, read from that server 201 in near real time. A read memory pointer in video services controller 202 just simply follows the write pointer, also in controller 202, by some non-zero amount. It is worth noting that the delay between the writing and the reading of a video signal stream is not important. In fact, one possible advanced video service that immediately follows is a "delayed broadcast on demand".

The video service controller 202 manages the writing and reading of all video signal streams, providing independent address information for each digital video signal stream that is written and/or read, as well as ATM virtual circuit (VC) information. In addition, control operations, e.g., "pause", are also provided. In this example, data are written in blocks that are divisible by 48. As data are read, ATM cells are formatted as part of the server's I/O operations and an ATM formatted signal is supplied as an output via 206.

It is assumed that all video VCs are routed to the OLTs 103 (FIG. 1, and associated OLCs 104). Within the OLC 104, only video streams corresponding to VCs being decoded by one or more ONUs 106 on the PSPON fiber line 110 and its associated optical fiber lines 111 are transmitted on the optical fiber. Therefore, remote channel selection is performed within the OLC 104.

### VIDEO SERVICES

The delivery of broadcast digital video signals, described above, can be extended to straightforward advanced video services. Some examples are briefly described below. For convenience it is assumed that the VC coding is as follows:
(1) VPI corresponds to the subscribed service, for example, broadcast, delayed broadcast-on-demand, video-on-demand, sports channel, penthouse channel, HBO, or the like. VPIs are assumed to be multicast to all subscribers of those services;
(2) VCI corresponds to the channel number.

### Delayed Broadcast

Since all broadcast video signals are stored in the video storage server 201, video signals can be played at any time by simply assigning a new, temporary, and unique VCI for the "playing" of a separate video signal output stream. Combining that VCI with the target ONU's 106 VPI provides the required routing information to the ONU's 106 MPEG decoder. A subscriber can view any soap opera, sporting event, news broadcast, etc. at any time. Indeed, given sufficient server memory, the VCR will become obsolete. This service is referred to as "delayed broadcast-on-demand".

### Video-On-Demand

Adding one or more ONU 106 (FIG. 1) MPEG2 encoders 203 (FIG. 2) for encoding and storing movies, yields the ability to deliver "movie- on-demand" services. Alternatively, video programs may be delivered as pre-encoded digital information. Similarly, any other video-on-demand service can be supported; videos that are neither movies nor broadcast video, e.g., how-to videos, or lectures at remote universities.

### INSERTING ADVERTISEMENTS

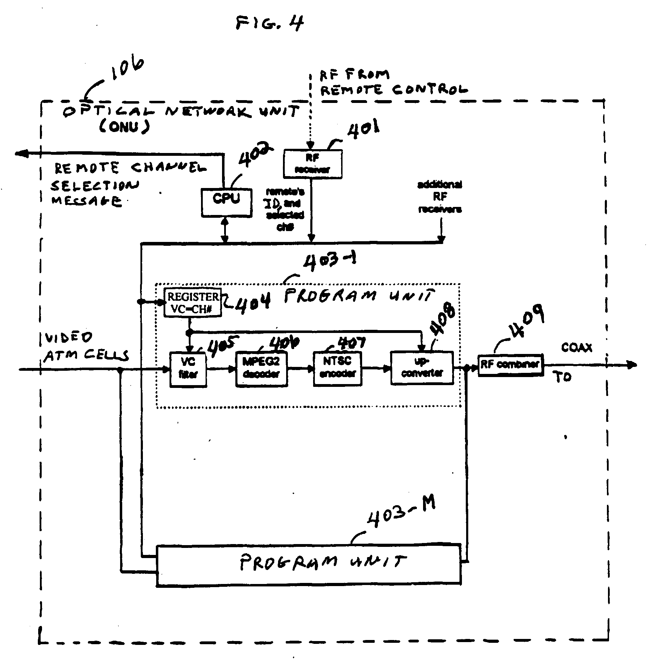

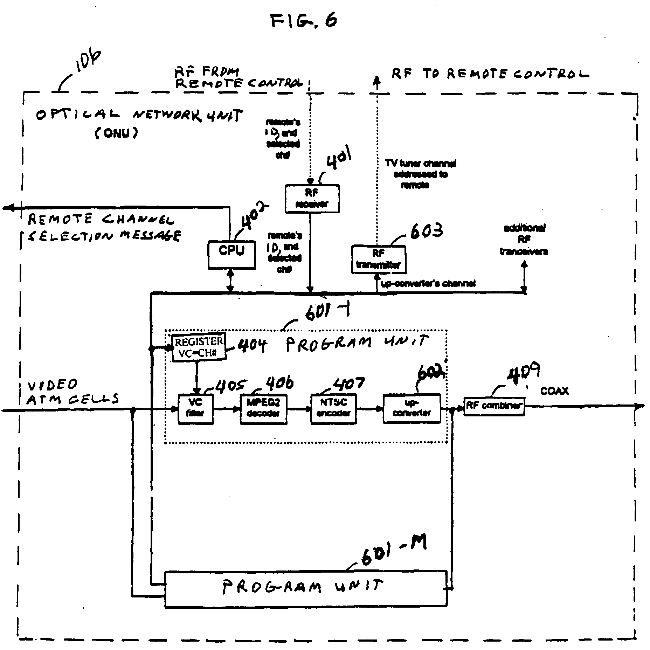

All video programming is stored with advertisements removed. Broadcast video signals contain the necessary control information to identify advertisements. If desired, those advertisements can be encoded and stored also, but if they are, they are recorded and stored as separate video signals. Any video signal played from the video storage server 201 can be "paused" at any time by video services controller 202, either in response to a request from a subscriber, or independent of the subscriber. The subscriber uses "pause" as he/she would with a VCR. When used by the video services controller 202, however, it would typically be to insert an advertisement. As described below, each ONU 106 (FIG. 1) MPEG2 decoder is capable of filtering out two VC streams simultaneously, actually, the two VC streams are never transmitted simultaneously. To insert an advertisement, the controller 202 activates the playing of the desired advertisement, but starting in the "paused" state. That advertisement is addressed, i.e., includes the appropriate VC, to the target TV 107, i.e., MPEG2 decoder 406, FIG. 4 or FIG. 6, assigned to that TV 107. When the advertisement is to begin, the playing video program is paused and the advertisement is "resumed", i.e., un-paused. When the advertisement is completed, the original video program is "resumed" and the advertisement is "paused".

Note that prior known on-demand video services assumed that the consumer pays for the on-demand video programs, i.e., VOD. Here, a "new" VOD service is introduced that includes advertisements and is paid for by the advertisers.

All on-demand video services can therefore have advertisements periodically inserted; Since this is a subscribed service, i.e., in order to get the advertiser to pay for the on-demand services, the subscriber is obligated to watch the advertisements. If the subscriber chooses to channel surf, i.e., change from channel-to-channel, the system is automatically informed, i.e., remote channel selection is assumed as described above. Therefore, since delivery of all video programs is under control of video server 101, channel changes can be inhibited during commercial intervals when advertisements are playing. This is readily realized by inhibiting responding to any new video program requests from the subscriber other than the one presently being viewed by the subscriber.

Alternatively, if channel surfing is initiated while the advertisement is "playing", the advertisement is "paused" until the subscriber returns. For example, if a 30 second advertisement is playing and the subscriber channel surfs for 20 seconds, when he/she returns the advertisement is played in its entirety after which the playing video program resumes. That program, however, picks up from that time meaning that 20 seconds of the program was missed, not 20 seconds of the advertisement.

### EXTENDED ADVERTISEMENT INSERTION

The advertisement insert technique can be extended to all broadcast video signals. Since all broadcast video programs are stored without the advertisements, all playing broadcast video programs are "paused" at the same time, and the same advertisement is played during the "paused" intervals of all the playing video programs. During the playing of the advertisement, the incoming broadcast video programs, if present, continue to be encoded and stored within the video server 101 and, therein, in video storage server 201. Note that insertion of the advertisement must occur no later than the first commercial interval across all broadcast video programs, since that video program is interrupted by the commercial interval. If a subscriber chooses to channel surf during the commercial interval, he/she will find the same advertisement playing on every channel. Since the broadcast video programs coming into the MPEG2 encoders have commercial intervals, as long as inserted advertisements do not exceed the commercial time intervals in the incoming broadcast video program, all video programs will eventually catch up.

The above process can only be used with broadcast video channels that contain commercial intervals. Programs such as CSPAN cannot be included. Although a consumer could choose to channel surf to channels such as CSPAN, the system, i.e., video services controller 202, will be informed. Advertisers will only be charged for the delivery of advertisements that are actually delivered. Consumers who systematically refuse to live up to the advertiser's agreement with them, to view the directed advertisements, will be charged for the deliver of the premium services instead of the advertisers. One alternative, which is easily implemented technically, would continue to play the advertisement even if the channel is switched to, for example, CSPAN. The implication is that a portion of that CSPAN video program would be lost. Another alternative would be to pause the advertisement if the subscriber switches to a video program that has no commercial intervals, e.g., CSPAN, resuming the advertisement when the subscriber returns to the original video program he/she was viewing, or to a video program that contains commercial intervals including advertisements. As described in the section above, this would result in some loss of the playing video programs, not the advertisements. Alternatively, a video program that the consumer returns to would now be viewed as a "delayed-on-demand" video program: Again, this is a subscribed service, with the operations described above agreed to by the subscriber in advance. Video programs including national advertisements that cannot be interfered with by the service provider would be treated similar to CSPAN described above. From the point of view of inserting advertisements, those programs do not have "advertisement insert slots".

FIG. 3 is an overall block diagram of a video storage server 201 (FIG. 2) including program library 302. Program library 302 also includes advertisements that are to be supplied to subscribers during commercial intervals, in accordance with the invention. Additionally, broadcast video programs are supplied for storage in program library 302 from MPEG2 encoders 203 via lines 205. Server 300 contains controller 310, data memory 311, distribution boards 312 and clock 313. In response to received requests, and responses in interactive systems, video services controller 202 (FIG. 2) issues control messages that are supplied to controller 310 in server 300 over data links 208 and 304 and issues control messages that are supplied to program library 302 over data links 208 and 305. It may also be desirable for video services controller 202 to be able to receive messages, such as status messages, from controller 310 and program library 302, so data links 208, 304 and 305 are shown to be bi-directional. Program library 302 sends data for video programs to be presented to data memory 311 in server 300 over data link 306. Server 300 sends video programs to distribution interfaces 314 over distribution links 315. Distribution interfaces 314 then forward programs to users, i.e., subscribers to the advertisement service. Data links 304, 305 and 306 can be implemented either as dedicated data links or networks, depending on the application. Server 300 and program library 302 can be at the same or different geographic locations, again depending on the application. An example of a typical configuration of the elements shown in FIG. 3 is an interactive cable television system in which video services controller 202 is located on the premises of a supplier of interactive television services, program library 302 and server 300 are at another location and serves many such suppliers and distribution interfaces 314 are cable system headends located on the premises of cable television companies. Similar systems can be configured in which programs are distributed to customers over telephone networks and distribution interfaces 314 are appropriate interfaces in such networks, or in which programs are distributed via microwave distribution systems, or in this example, ATM transmission systems.

In this example, as indicated above, requests as well as subscriber identification information are sent from an ONU 106 via VCs to video server 101 and, therein, to video services controller 202.

As can be seen from the above description, there are numerous possible configurations for server 300, program library 302 and distribution interfaces 314, and there can be any number of servers 300, program libraries 302 and distribution interfaces 314, all of which can be used together in accordance with the principles of the invention.

Again, video services controller 202 (FIG. 2) can be any general-purpose computer, such as a workstation or the like, capable of receiving and transmitting messages over data links 208, 304 and 305, of processing requests and responses received, of sending the appropriate control messages to server 300 and program library 302 and of receiving messages from server 300 and program library 302, if required. Such processing may involve simply responding to requests for programs, such as movies or broadcast video programs including commercial intervals, by sending the appropriate control messages to a program library 302 where the appropriate video program is stored to transmit a data block for the video program to data memory 311 in a server 300 and to the server 300 to transmit the video program in a specified channel over a distribution link 315. Alternatively, such processing may involve the actual assembly of a video program from video and/or audio clips stored by program library 302, which are then stored in data memory 311 and such assembled program may be interactive in that the clips to be sent in a later part of a program may be determined by responses from users received by video services controller 202. Moreover, the appropriate advertisements to be directed to a particular subscriber or group of subscribers are controllably inserted in commercial intervals in the video program being viewed. Again, these commercial intervals may readily be realized by pausing the video program being viewed for the appropriate interval. Furthermore, such assembled program may contain multiple video or audio clips to be transmitted to the user at the same time. For example, a video sequence may comprise a background and one or more overlays, each of which is to be transmitted as a separate signal by server 300 over a distribution link 315. Such separate signals are combined into a single video signal for presentation to the user at some point between server 300 and the user, such as at the headend of a cable television system or the cable converter used at the use's premises to connect the users television receiver to the cable system.

Program library 302 can be a large capacity system of any convenient type using devices such as magnetic discs, optical discs or magnetic tape. One of the developments that has made video storage server 201 (FIG. 2) feasible is the availability of large RAMs for use in data memory 311 in server 300.

In this example, controller 310 contains a microprocessor and various other elements. Each distribution board 312 contains a FIFO, a channel memory, a communications interface and other elements. Each output signal stream is identified by a channel identity field assigned by controller 310. In general terms, for each packet transmitted, either data memory 311 places a channel identity via 327 on channel-identity bus 320 and 48 program bytes yia 325 on data bus 321, or controller 310 places a channel identifier via 326 on bus 320 and 48 control-message bytes via 323 on data bus 321. Each distribution board 312 can be set to transmit one or more selected channels. When a selected channel identity is present on channel identity bus 320, the distribution board writes such channel identity and the program or message data then appearing on data bus 321 into its FIFO. The communications interface transmits packets from the other end of the FIFO at the appropriate rate for the associated distribution link 315, for example, 155 megabit/second on a SONET OC-3 system, translating the channel identifier to the appropriate ATM VC.

FIG. 4 shows, in simplified block diagram form, details of a residential centralized video controller, namely, one implementation of ONU 106, employing an embodiment of the invention that may be employed in the system 100 of FIG. 1. In this example, ONU 106 includes at least one radio frequency (RF) receiver 401, CPU 402, one or more program units 403-1 through 403-M and RF combiner 409. It is noted that there must be at least "M" RF receivers 401 corresponding to the number "M" of program units 403. The number of program units 403, i.e., M, defines the number of video programs that can be viewed simultaneously by multiple TVs 107 within a location, e.g., a home. By way of a simple example, if there are four (4) program units then only four programs can be simultaneously viewed, Thus, if there were only four TVs 107 at the location, there would not be any program "blocking". However, if more than four (4) TVs were at the location, then only four (4) different channels may be viewed. The TVs in excess of the first four to have initiated receiving a channel would be restricted to viewing one of the four active channels, and would not have the ability to change a channel being viewed from the four active channels.

RF receiver 401 receives RF signals including control messages from a remote control unit 108 associated with a TV 107 (FIG. 1). This may be realized by employing a RF transmitter in the TV remote control unit, described below in conjunction with FIG. 5, and a RF receiver, both of a type used in a wireless, i.e., cordless, telephone, now well known in the art. Note that there may be a plurality of TVs and a corresponding plurality of r control units. ONU 106 would include as many RF receivers as there are remote control units. RF control messages include, for example, the associated remote control unit identity (ID) and a selected channel number. Note that the remote control 108 ID also identifies the subscriber or subscriber household and, therefore, the services subscribed to. Other control messages include, in addition to the remote control ID, for example, an indication that an associated TV has been either powered ON or powered OFF. The information received in the RF control message is supplied to CPU 402. CPU 402 is, for example, a microprocessor including memory. When CPU 402 receives a RF transmission from a previously inactive remote control unit, it assigns one of program units 403 to the TV associated with the remote control unit, it writes the VC corresponding to the received channel number into register 404 and determines that VC through use of a look-up table. It maintains a count of how many active TVs 107 are tuned to the selected program and it stores the selected channel for this TV 107 in a look-up table. If no other served TV 107 is already tuned to the selected program, CPU 402 transmits a message up-stream to video server 101 and video services controller 202, therein, requesting the transmission of the selected video program. The selected program is transmitted down-stream in ATM cells on the virtual circuit (VC) identified by the selected program channel number and received at the selected program unit 403, in this example, program unit 403-1. The selected channel number's VC and channel number are supplied to virtual circuit (VC) filter 405 and to agile up-converter 408, respectfully, to tune them to the selected program channel.

Note that in this example, VC filter 405 is programmed with two (2) VCs. One VC corresponds to the selected video program to be viewed and a second VC corresponds to the particular advertisement to be viewed by the subscriber. Indeed, the VC for the advertisement can be unique for a particular household or multicast to a group of different subscribers. Video server 101, in this example, does not simultaneously transmit both VCs. It transmits only the video program VC until the advertisement is to be inserted in a commercial interval. Then, video server 101 pauses the delivery of the video program and initiates the transmission of the advertisements. When the commercial interval and, hence, the advertisement is completed, transmission of the video program is resumed. The selected channel number (VC) and advertisement number (VC) are supplied to virtual circuit (VC) filter 405 and the selected channel number is supplied to agile up-converter 408 to tune them to the selected program channel.

The selected video program is received at ONU 106 and supplied to VC filter 405 as a sequence of ATM cells. VC filter 405 filters the received signal to obtain the selected program channel signal as a MPEG2 digital video signal, i.e., a compressed digital video signal, that is supplied to MPEG2 decoder 406. In turn, MPEG2 digital decoder 406 yields an analog version of the selected video channel, which is supplied to NTSC encoder 407 where it is encoded. The NTSC encoded signal is then supplied to up-converter 408, where the video signal is frequency converted to the selected standard video channel frequency, i.e., 6 MHz channel. Again, note that up-converter 408 is a so-called agile up-converter that adjusts its frequency to the frequency of the supplied program channel number. The resulting channel signal is supplied to RF combiner 409 where it is combined with channel signals from others of program units 403, if any, and transmitting via COAX to one or more TVs 107, i.e., all the TVs, at the location, e.g., a home.

FIG. 5 shows, in simplified block diagram form, details of a remote control unit 108 (FIG. 1), including an embodiment of the invention, that may be employed with the video controller of FIG. 4. Shown is button pad 501 for keying a desired channel number that is supplied to RF transmitter 502 and infrared (IR) transmitter 503. RF transmitter 502 transmits to ONU 106 a RF signal, for example, a packet containing a message including the remote unit ID and the selected channel number. IR transmitter 503 transmits an infrared signal in well known fashion to an associated TV 107-1.

In operation, a user turns ON the TV 107-1 by pressing an "ON" button on button pad 501 of remote control 108-1. This results in two communications events. First, a wireless IR signal transmission is made via IR transmitter 503 to the TV 107-1, which turns its power ON in usual fashion. Second, a wireless RF transmission is made via RF transmitter 502 of a control packet containing the identification (ID) of the remote control unit 108-1 and a power ON command. ONU 106 (FIG. 4) via CPU 402 retains knowledge of the channel that each TV 107 at the location was tuned to when the particular TV was last turned OFF, which is the channel that the TV should be initially tuned to when it is turned ON. This is so the TV 107 closely mimics current conventional analog video delivery techniques. ONU 106 utilizes this retained information to perform two operations. First, if the previously viewed channel is not being viewed currently by another TV 107, ONU 106 employs the information to insure that a MPEG2 decoder 406, if one is available, and associated circuitry is assigned to the retained channel, i.e., to the corresponding ATM VC. Second, ONU 106 sends a control packet up-stream to video server 101 (FIG. 1) and, therein, to video services controller 202, requesting that a program on the desired previously viewed channel be transmitted to the ONU 106. Assuming that a MPEG2 decoder 406 is available, the associated TV now displays the program on the channel that the TV was last tuned to prior to being turned OFF.

As a user changes TV channels, using the remote control 108-1, as is done with conventional remote controls, the TV's channel is changed through the IR wireless link. In addition, however, wireless RF control messages are transmitted via RF transmitter 502 to, the ONU 106 and, therein, to RF receiver 401. ONU 106 appropriately formulates and passes up-stream messages via CPU 402 to the video server 101 and, therein, to a remote video services controller 202 requesting that the transmitted digital video program for that PSPON fiber 110 and associated fiber 111 be appropriately changed. Also, if not already assigned, a MPEG2 decoder 406 and associated circuitry are assigned. If a digital video program is selected that is already being decoded by a MPEG2 decoder 406, the previously assigned MPEG2 decoder 406 is released. CPU 402 retains information regarding the number of TVs 107 that are viewing each requested video program. When a requested video program is no longer being viewed by any of TVs 107, CPU 402 transmits an up-stream message to video server 101 and, therein, to video services controller 202 indicating that the video program is no longer being viewed.

If the selected program is not a conventional broadcast program, the system operation might be different. For example, if video-on-demand (VOD) is selected, the user is assigned an otherwise unused channel for point-to-point delivery of the interactive video preview/select program. The MPEG2 decoder 406, for this example, is dedicated to that TV 107, remote control 108 pair. Other TVs can also view that video, but its interactive control is disabled, as long as, the TV 107 associated with the initiating remote control 108 is still viewing the program. If the initiating remote control 108 is employed to select a different program, control of the VOD is relinquished and the next remote control 108 that attempts an interactive control function, e.g., pause, is assumed to be the initiating remote control 108. Similarly, other interactive TV applications can be accessed. For some interactive applications, such as games, multiple controlling remote controls 108 are appropriate. In such a situation, however, the application would typically distinguish between the active remote controls 108.

In summary, when CPU 402 (FIG. 4) receives a RF transmission from a previously inactive remote control unit 108, it responds as follows:
- if no other active TV 107 is presently viewing the selected program channel number, it assigns a program unit 403;
- it writes the selected channel number's VC contained in a look-up table in CPU 302 to register 404;
- it maintains a count of how many active TVs 107 are receiving the selected program channel number and stores the selected channel number in the look-up table;
- it transmits a message up-stream to video server 101 and, therein, to video services controller 202, requesting the transmission of the selected program channel number on the VCI = selected program channel number, and VPI corresponding to the service group;
- if the selected program channel number is presently being viewed by another active TV 107, only the count of how many of TVs 107 are receiving the selected program channel number is updated;
- VC filter 405 is programmed with both the program VC and the advertisement VC.

FIG. 6 shows, in simplified block diagram form, details of another centralized video controller employing an embodiment of the invention that may be employed in the system of FIG. 1. In this example, ONU 106 includes at least one radio frequency (RF) receiver 401 and at least one associated RF transmitter 603, CPU 402, one or more program units 601-1 through 601-M and RF combiner 409. It is noted that there are many RF transceivers including a receiver 401 and transmitter 603 as there are remote units 108. The number of program units 601, i.e., M, defines the number of video programs that can be simultaneously viewed by multiple TVs within a location, e.g., a home. By way of a simple example, if there are four (4) program units than only four programs can be simultaneously viewed. Thus, if there were only four TVs at the location, there would not be any program "blocking". However, if more than four (4) TVs were at the location, then only four (4) different channels may be viewed. The TVs in excess of the first four to have initiated receiving a channel would be restricted to viewing one of the four active channels, and would not have the ability to change a channel being viewed from the four active channels.

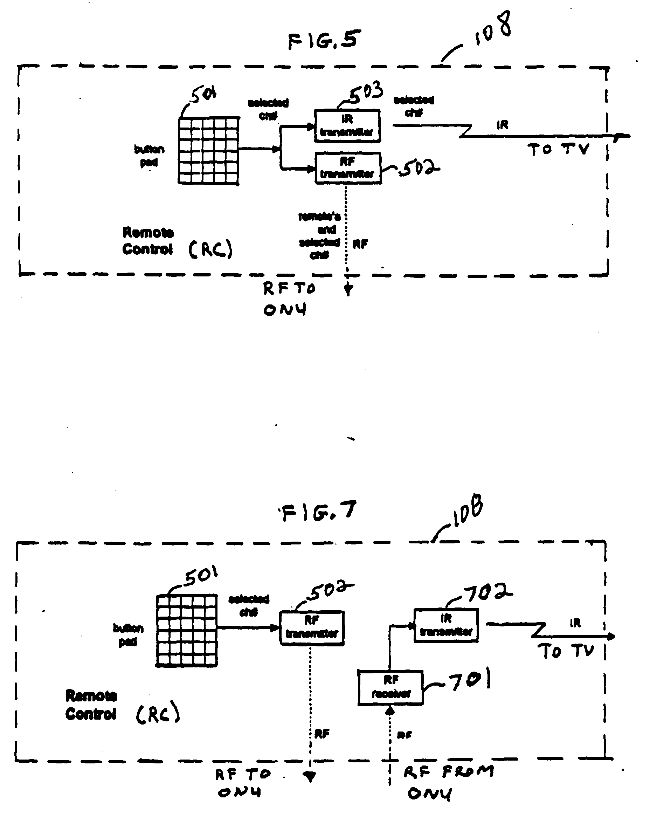

As in the embodiment of FIG. 4, RF receiver 401 receives RF signals including control messages from a remote control unit associated with a TV 107 (FIG. 1). This may be realized by employing a RF transmitter 402 in the TV 107 remote control unit 108, described below in conjunction with FIG. 7, and a RF receiver 401, both of the type used in a wireless telephone, which are well known in the art. In this example, each RF receiver 401 has an associated RF transmitter 603 for transmitting a wireless RF signal to an associated remote control unit 108 including the fixed channel number that up-converter 602 is tuned to, as described below. Note that there may be a plurality of TVs 107 and a corresponding plurality of remote control units 108. Again, note that ONU 106 would include as many RF receivers and associated RF transmitters, as there are remote control units 108. RF control messages include, for example, the associated remote control unit identity (ID) and a selected channel number. Other control messages include, in addition to the remote control ID, for example, an indication that an associated TV has been either powered ON or powered OFF. The information received in the RF control message is supplied to CPU 402. CPU 402 is, for example, a microprocessor including memory. CPU 402 retains a look-up table containing information indicating the last selected program channel number for each of TVs 107, including those of TVs 107 that are currently inactive. When CPU 402 receives a RF transmission from a previously inactive remote control unit 108, it assigns one of program units 601 to the TV associated with the remote control unit, it writes the last selected program channel number into register 404, it writes the RF video program channel number being used by the assigned program unit 601 to RF transmitter 603 which, in turn, transmits the RF signal to the RF receiver in an associated remote control unit 108, it maintains a count of how many active TVs are tuned to the selected channel number and it stores the selected channel number for this TV 107 in a look-up table. If no other served TV 107 is already tuned to the selected channel number, CPU 402 transmits a message up-stream to video server 101 and a video services controller 202, therein, requesting the transmission of the selected channel. The selected channel is transmitted down-stream in ATM cells on the virtual circuit identifier (VCI) identified by the selected program channel number and the VPI corresponding to the video service group, and received at the selected program unit 601, in this example, program unit 601-1. The selected channel number's VC is supplied to virtual circuit (VC) filter 405 to tune it to the selected program channel.

Note that in this example, VC filter 405 is programmed with two (2) VCs. One VC corresponds to the selected video program to be viewed and a second VC corresponds to the particular advertisement to be viewed by the subscriber. Indeed, the VC for the advertisement can be unique for a particular household or multicast to a group of different subscribers. Video server 101, in this example, does not transmit simultaneously both VCs. It transmits only the video program VC until the advertisement is to be inserted in a commercial interval. Then, video server 101 pauses the delivery of the video program and initiates the transmission of the advertisements. When the commercial interval and, hence, the advertisement is completed, transmission of the video program is resumed. The selected channel number (VC) and advertisement number (VC) are supplied to virtual circuit (VC) filter 405

Again, the selected video program channel is received at ONU 106 and supplied to VC filter 405 as a sequence of ATM cells. VC filter 405 obtains the selected program channel signal as a MPEG2 digital video signal that is supplied to MPEG2 decoder 406. In turn, MPEG2 digital decoder 406 yields an analog version of the selected video channel that is supplied to NTSC encoder 407 where it is encoded. The NTSC encoded signal is then supplied to up-converter 602 where the video signal is frequency converted to a predetermined standard video channel frequency, i.e., 6 MHz channel. The resulting channel signal is supplied to RF combiner 409 where it is combined with channel signals from others of program units 601, if any, and transmitted via COAX to one or more TVs 107at the location, e.g., a home.

FIG. 7 shows, in simplified block diagram form, details of a remote control unit 108 (FIG. 1), including an embodiment of the invention, that may be employed with the video controller 106 of FIG. 6. Shown is button pad 501 for keying a desired channel number that is supplied to RF transmitter 502. RF transmitter 502 transmits a RF packet signal including the remote units ID and the selected channel number to ONU 106. RF receiver 701 receives the RF signal including the RF video program channel number of up-converter 602 of the assigned program unit 601 from RF transmitter 603 (FIG. 6) and supplies the channel number to IR transmitter 702. In turn, IR transmitter 702 transmits an infra red signal in well known fashion to an associated TV 107.

ONU 106 of FIG. 6 has a fixed channel, i.e., RF frequency, assigned to each MPEG2 decoder 406, actually its up-converter 602. Therefore, the video signal from each MPEG2 decoder 406 of FIG. 6 is always transmitted on the same channel. A TV 107 would be assigned a MPEG2 decoder 406 when it is turned ON. The VC is changed as channels are changed, but the TV 107 stays tuned to the channel number of the MPEG2 decoder 406 it was assigned.

As in ONU 106 of FIG. 4, the user turns on the TV 107 by pressing the "power ON" button of the associated remote control 108. This directly results in only one communications event. A "wireless" RF control packet containing the identification of the remote control, and the "power ON" command is sent to the ONU 106. The ONU 106 retains knowledge of the channel each TV 107 was tuned to when it was last turned OFF and, therefore, the channel that should be initially delivered to that TV 107 to closely mimic conventional analog video delivery techniques. As described above, the ONU 106 uses that information to perform three operations. First, it insures that a MPEG2 decoder 406, if one is available, and associated circuitry is assigned to that video channel, i.e., that ATM VC. In addition, if the selected program channel is not being viewed by another of TVs 107, ONU 106 sends a control packet up-stream to video server 101 and, therein, to video services controller 202, requesting that the selected program channel, i.e., VC, be transmitted on that access PSPON fiber 110 and associated fiber 111. Finally, the ONU 106 transmits a return wireless control message back to the associated remote control 108 containing the channel number used by the assigned MPEG2 decoder 406. In response, the remote control 108 sends an IR transmission to the associated TV 107 turning its power ON, and tuning it to the designated channel. Assuming that a MPEG2 decoder 406 was available, that TV 107 now displays the program of the channel that TV was displaying when last turned OFF.

As a user changes TV channels using the remote control 108 as is done with conventional remote controls, the wireless RF control messages are transmitted to the ONU 106 indicating those channel changes. The ONU 106 appropriately changes the MPEG2 decoder's VC, and passes up-stream messages requesting that the transmitted digital video channels for that PSPON fiber 110 and associated fiber 111 be appropriately changed.

If a MPEG2 decoder 406 is not available, which is only possible if there are more TVs 107 than decoders 406, the TV 107 will display noise unless the selected channel is one already being decoded for another TV 107. In that situation, a wireless RF control message is sent to the remote control 108, and passed to the associated TV 107 using the IR wireless link, appropriately changing TV channels. Only the remote control 108 that selected the program can change it. However, if that TV 107 is turned OFF, the next remote control 108 to attempt to change the channel will be given control of that MPEG2 decoder 406.

In summary, when CPU 402 (FIG. 6) receives a RF transmission from a previously inactive remote control unit 108, it responds as follows:
- if no other active TV 107 is presently viewing the selected program channel number, it assigns a program unit 403;
- it writes the selected channel number's VC contained in a look-up table in CPU 402 to register 404;
- it maintains a count of how many active TVs 107 are receiving the selected program channel number and stores the selected channel number in the look-up table;
- it transmits a message up-stream to video server 101 and, therein, to video services controller 202, requesting the transmission of the selected program channel number on the VCI = selected program channel number, and VPI corresponding to the video service group;
- if the selected program channel number is presently being viewed by another active TV 107, only the count of how many of TVs 107 are receiving the selected program channel number is updated;
- it transmits an RF message to the corresponding remote control unit 108 containing the last selected channel number.

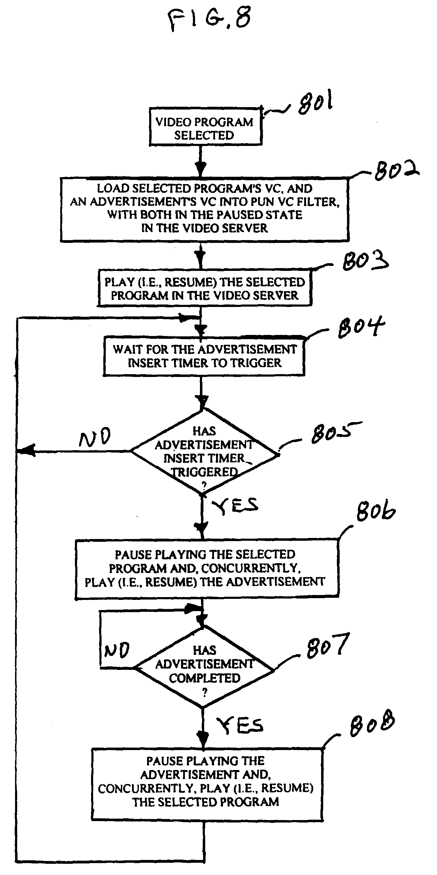

The flow charts of FIGs. 8 through 12 illustrate the steps involved to effect several example scenarios of operation of the invention.

FIG. 8 is a flow chart illustrating the steps in unicast playing of a selected video program contained in the video server 101 of FIG. 2, periodically inserting advertisements. Specifically, in step 801 a video program is selected as described above. Then, in step 802 the selected video program's VC and an advertisement's VC are loaded in the selected PUN, for example 403-1 of FIG. 4, register 404 and, therefore, also VC filter 405, with both the video program and the advertisement to be inserted in the paused state in video server 101. Step 803 causes resumption of playing the selected video program in video server 101. Thereafter, step 804 causes a wait for the advertisement insert timer (not shown) to trigger in video server 101. Step 805 tests to determine if the insert timer has triggered. If the test result is NO, control is returned to step 804, and steps 804 and 805 are iterated until step 805 yields a YES result. When the test result in step 805 is YES, step 806 causes the pausing of playing the selected video program and, concurrently, causes the resumption of playing of the advertisement. Then, step 807 tests to determine if playing of the advertisement has been completed. If the test result is NO, playing of the advertisement continued. If the test result in step 807 is YES, the advertisement has completed playing, and step 808 causes the pausing of playing the advertisement and, concurrently, causes the resumption of playing the selected video program. Thereafter, control is transferred to step 804, and steps 804 through 808 are iterated. This iteration process continues.

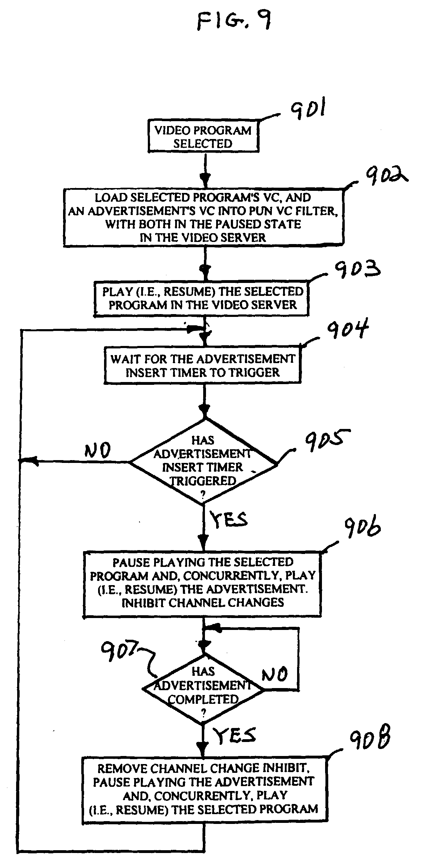

FIG. 9 is a flow chart illustrating the steps in playing a video program contained in the video server 101 of FIG. 2, periodically inserting advertisements and inhibiting attempts to change the video program being viewed when advertisements are being played. Specifically, in step 901 a video program is selected as described above. Then, in step 902 the selected video program's VC and an advertisements VC are loaded in the selected PUN, for example 403-1 of FIG. 4, register 404 and, therefore, VC filter 405, with both the video program and the advertisement to be inserted in the paused state in video server 101. Step 903 causes resumption of playing the selected video program in video server 101. Thereafter, step 904 causes a wait for the advertisement insert timer (not shown) to trigger in video server 101. Step 905 tests to determine if the insert timer has triggered. If the test result is NO, control is returned to step 904, and steps 904 and 905 are iterated until step 905 yields a YES result. When the test result in step 905 is YES, step 906 causes the pausing of playing the selected video program and, concurrently, causes the resumption of playing of the advertisement. Additionally, step 906 inhibits any channel changes during commercial intervals when advertisements are being played. Note that for ONU 106 including agile up-converter 408, inhibiting channel changes involves sending a message to the associated remote control unit 108, instructing it to inhibit the channel changes. This is readily realized by employing an RF transmitter in ONU 106 and a corresponding RF receiver in remote control 108, and sending an RF message from the ONU 106 to remote control 108 to inhibit changing of channels. Simply, all that is required in remote control 108 is to inhibit the infra red transmitter from transmitting channel information to the corresponding TV 107. Such an arrangement can also be applied directly to TV 107. That is, TV 107 can be sent a message from ONU 106 that would inhibit changing of the channel being viewed during commercial intervals. Alternatively, a message can accompany the advertisement that would inhibit changing of the channel being viewed during the playing of the associated advertisement. For ONU 106 including non-agile up-converter 602, inhibiting channel changes involves either sending a message to the associated remote control unit 108 to inhibit channel changes or delaying any response by OLC 104 to requests to change channels. Then, step 907 tests to determine if playing of the advertisement has been completed. If the test result is NO, playing of the advertisement is continued. If the test result in step 907 is YES, the advertisement has completed playing, and step 908 causes the channel change inhibit to be removed, causes the pausing of playing the advertisement and, concurrently, causes the resumption of playing the selected video program. Thereafter, control is transferred to step 904, and steps 904 through 908 are iterated. This iteration process continues.

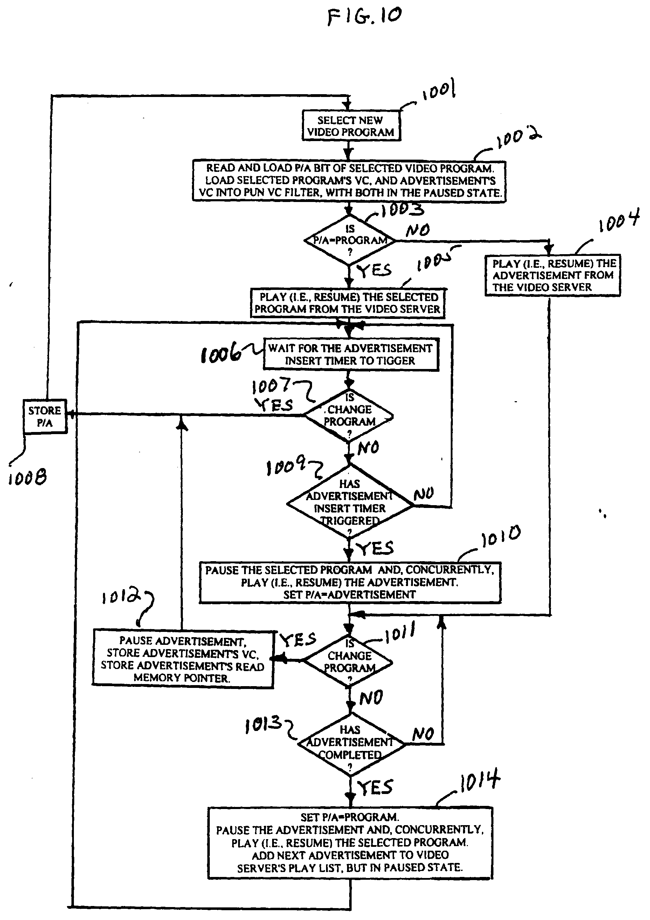

FIG. 10 is a flow chart illustrating the steps in unicast playing a video program contained in the video server 101 of FIG. 2, periodically inserting advertisements, in which the video program belongs to a predetermined group associated with a particular advertisement to be viewed. As indicated, each pre-stored program, i.e., service, is associated with a group of video programs and each group of programs is associated with a particular sequence of advertisements to be inserted therein. If the video program being played is changed to one that is not part of the group, while an advertisement is playing, the playing of the advertisement must be resumed and played to completion when the viewer changes back to a video program that is included in the group before being allowed to view the selected video program in the group.

Briefly, a one (1) bit P/A register (not shown) is required in VC filter 405 of ONU 106. The P/A bit identifies whether the selected video program or the advertisement is playing. When the viewer changes the selected video program, the P/A bit is stored in memory in ONU 106 and is associated with the prescribed group of video programs, as well as, the particular remote control unit 108 that the viewer is using. The VC for the newly selected video program and the VC for an associated advertisement, to be inserted therein, are written into register 404 and, therefore, are also provided to the VC filter 405. If the P/A bit indicates that an advertisement was playing when the video program, or one of the group of video programs, was selected, playing of the advertisement is resumed. When the advertisement is playing, the P/A bit suspends authority to receive the selected video program. Note that suspending the authority to receive the selected video program's VC is required to change broadcast video programs being simultaneously stored and broadcast in server 101.

Returning to FIG. 10, in step 1001 a new video program to be played is selected. Then, step 1002 causes the P/A bit for the selected video program to be read and loaded into the P/A register in, for example, PUN 403-1 (FIG. 4). Also, the VC for the selected video program and the VC for an associated advertisement to be loaded in register 404 and, therefore, also provided to VC filter 405, with both being in the pauses state. Step 1003 tests to determine whether the P/A bit indicated that a video program is to be played. If the test result is NO, control is transferred to step 1004. If the test result in step 1003 is YES, the selected video program is being played, and step 1005 causes the selected video program from the video server 101 to resume to be played. Step 1006 is a wait interval, is causes for the advertisement insert timer (not shown) to trigger in video server 101. Thereafter, step 1007 tests to determine if a video program change has been made. If the test result is YES, control is transferred to step 1008 and the P/A bit indicating a video program is stored. Thereafter, control is transferred to step 1001. If the test result in step 1007 is NO, step 1009 tests to determine if the advertisement timer has triggered. If the test result is NO control is returned to step 1006 and appropriate ones of steps 1006, 1007 and 1009 are iterated until step 1009 yields a YES test result. Upon step 1009 yielding a YES test result, control is transferred to step 1010, which causes the selected video program to be pauses and, concurrently, causes playing, i.e., the resumption, of the advertisement and, then sets P/A=ADVERTISEMENT. Then, control is transferred to step 1011. Returning to step 1004, upon step 1003 yielding a NO result, step 1004 causes the playing, i.e., resumption, of the advertisement from video server 101. Thereafter, control is transferred to step 1011. Step 1011 tests to determine if a video program change has been made. If the test result is YES, control is transferred to step 1012 which causes 1 pausing playing of the advertisement, storing of the advertisement's VC, and storing of the advertisement's read memory pointer. Then, control is transferred to step 1008 and the P/A bit indicating a video program is stored. Thereafter, control is transferred to step 1001. If the test result in step 1011 is NO, step 1013 tests to determine if the advertisement timer has triggered. If the test result in step 1013 is NO, control is returned to step 1011 and appropriate ones of steps 1011 and 1013 are iterated until step 1013 yields a YES test result. Upon step 1013 yielding a YES test result, control is transferred to step 1014, which causes the setting of PA=PROGRAM, pausing the playing of the advertisement and, concurrently, resuming playing of the selected video program. Then, step 1014 causes adding the next advertisement to the video server 101 play list, but in the paused state. Then, control is transferred to step 1001 and appropriate ones of steps 1001 through 1014 are iterated. This iteration process continues.

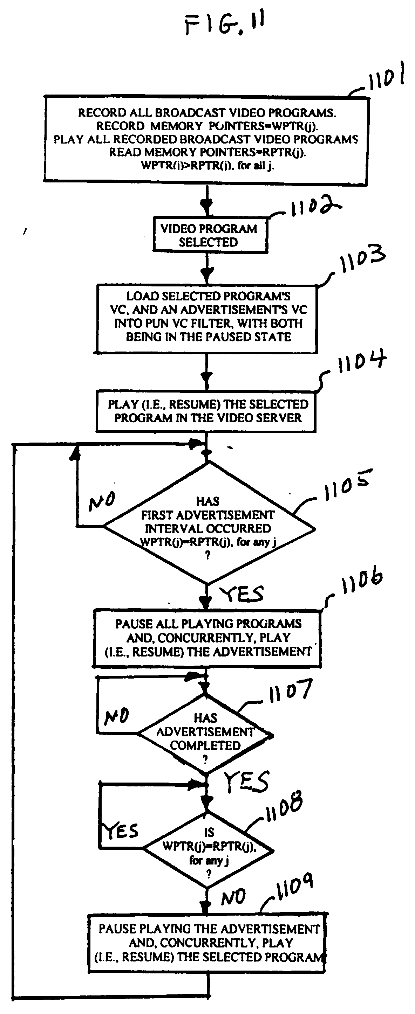

FIG. 11 is a flow chart illustrating the steps in playing a video program contained in the video server of FIG.2 which is being recorded as it is played. To this end, the play pointer may immediately follow the record pointer. Note that the same advertisement's VC is used for all played programs. The advertisement, however, is played as a video-on-demand program, with a different advertisement unicast to each PUN or at least to each household. Specifically, step 1101 causes recording of all broadcast video programs, recording memory POINTERS=WPTR(j), playing of all recorded broadcast video programs, reading memory POINTERS=RPTR(j) and where WPTR(j)>RPTR(j), for all j. Then, step 1102 indicates that a video program has been selected. Step 1103 causes the loading of the selected video program's VC, and an advertisement's VC into PUN VC filter 405, with both being in the paused state. Step 1104 causes the resumption of playing the selected video program in video server 101. Thereafter, step 1105 tests to determine if the first advertisement interval has occurred, namely, WPTR(j)=RPTR(j), for any j. If the test result is NO, step 1105 is iterated until it yields a YES result. Upon step 1105 yielding a YES result, control is transferred to step 1106, which causes the pausing of all playing video programs and, concurrently, the resumption of playing the advertisement. It should be noted that each PUN could be assigned its own unique advertisement VC. When advertisements are resumed, i.e., played, all advertisement VCs are rescinded. Step 1107 tests to determine if playing of the advertisement has completed. If the test result it NO, step 1107 is iterated unit it yields a YES result. Upon step 1107 yielding a YES result, step 1108 tests to determine if WPTR(j)=RPTR(j), for any j, which implies that the storing of the program has been suspended; i.e., the read pointer has caught up. If the test result is YES, step 1108 is iterated until it yields a NO result. Upon step 1108 yielding a NO result, step 1109 causes the pausing of playing of the advertisement and, concurrently, the resumption of playing the selected video program. The No result in step 1108 implies that storing of the program has resumed, i.e., WPTR(j) > RPTR(j). Thereafter, control is transferred to step 1105 and steps 1105 through 1109 are iterated. This iteration process continues.

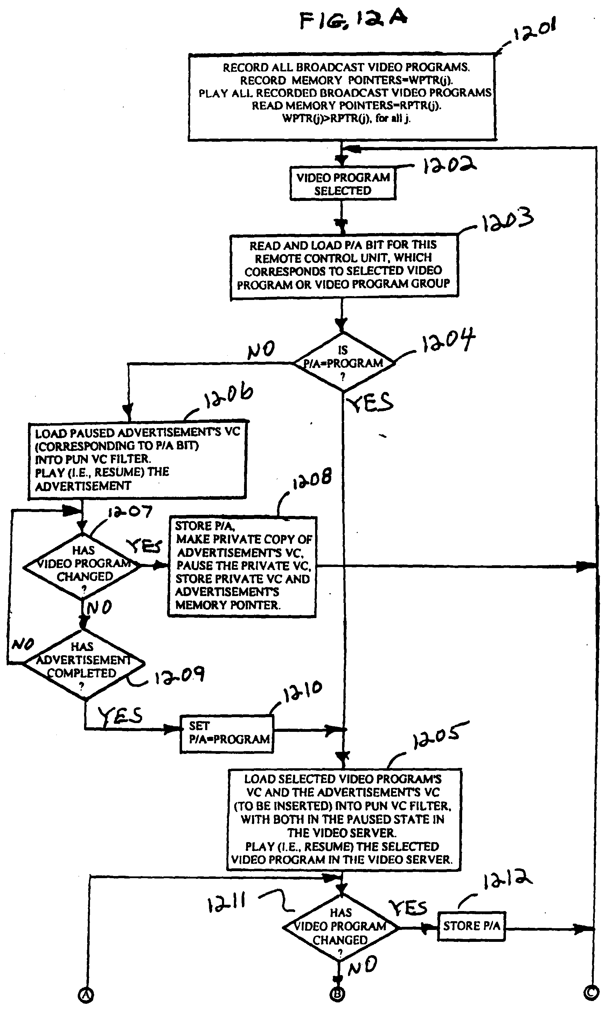

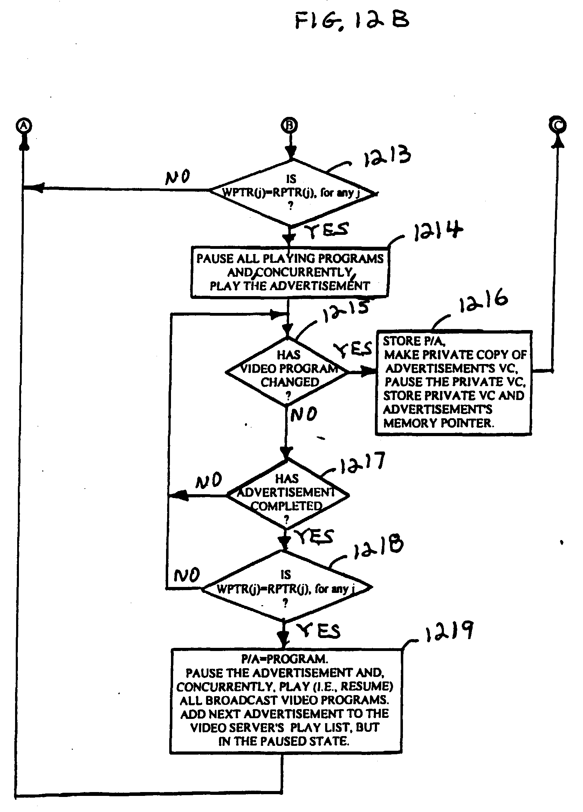

FIG. 12A and FIG. 12B, when connected A-A, B-B and C-C, show a flow chart illustrating the steps in playing a video program contained in the video server of FIG. 2, periodically inserting advertisements, in which if a different program is selected during the playing of an advertisement, playing of the advertisement is resumed upon the program being changed. Note that each pre-stored program, i.e., service, is associated with a group of video programs and each group of programs is associated with a particular sequence of advertisements to be inserted therein, to all households, to groups of households or a different sequence of advertisements for each household. A one (1) bit P/A register (not shown) is required in register 404 of ONU 106. The P/A bit identifies whether the selected video program or the advertisement is playing. When the viewer changes the selected video program, the P/A bit is stored in memory in ONU 106. The newly selected video program's VC and its associated advertisement's VC are written into register 404 and, therefore, inputted to VC filter 405. If the P/A bit indicates that the advertisement was playing when this video program, or one of its associated group, was last selected, the advertisement is resumed playing.

Specifically, step 1201 causes recording of all broadcast video programs, recording memory POINTERS=WPTR(j), playing of all recorded broadcast video programs, reading memory POINTERS=RPTR(j) and where WPTR(j)>RPTR(j), for all j. Then, step 1202 indicates that a video program has been selected. Then, step 1203 causes the reading and loading of the P/A bit for this associated remote control unit 108, which corresponds to the selected video program or video program group. Step 1204 tests to determine if P/A=PROGRAM. If the test result is YES, control is transferred to step 1205. If the test result in step 1204 is NO, step 1206 causes the loading of the paused advertisement's VC, corresponding to the P/A bit, in PUN VC filter 405, and then, causes the resumption of playing of the advertisement. Thereafter, step 1207 tests to determine if the video program has changed. If the test result is YES, step 1208 causes storing of the P/A, making of a private copy of the advertisement VC, pausing the private VC, and storing of the private VC and advertisement's memory pointer. Then, control is transferred to step 1202, and appropriate ones of steps 1202 through 1208 are iterated until step 1207 yields a NO result. Upon step 1207 yielding a NO result, step 1209 tests to determine if the advertisement has completed playing. If the test result in step 1207 is NO, control is transferred to step 1207, and appropriate ones of steps 1207 and 1208 and 1202 through 1209 are iterated until step 1209 yields a YES result. Upon step 1209 yielding a YES result, step 1210 causes the setting of P/A=PROGRAM and control is transferred to step 1205. Step 1205 causes the loading of the selected video program's VC and the advertisement's VC to be inserted into PUN VC filter 405, with both in the paused state in video server 101. Then, step 1205 causes the resumption of playing the selected video program in the video server 101. Step 1211 tests to determine if the video program has changed. If the test result is NO, control is transferred to step 1213. If the test result in step 1211 is YES, control is transferred to step 1212 and the P/A bit indicating a video program is stored. Thereafter, control is transferred to step 1202, and appropriate ones of steps 1202 through 1212 are iterated until step 1211 yields a NO result. Then, step 1213 tests to determine if WPTR(j)=RPTR(j), for any j. If the test result is NO control is returned to step 1211, and step 1211 is repeated and appropriate ones of steps 1212 and 1202 through 1211 are iterated until step 1211 yields a NO result and control is again transferred to step 1213. Then, if step 1213 again yields a NO result, appropriate ones of steps 1202 through 1213 are iterated until step 1213 yields a YES result, and step 1214 causes pausing playing of all video programs and, concurrently, causes the playing of the advertisement. Thereafter, step 1215 tests to determine if the video program has changed. If the test result is YES, step 1216 causes storing of the P/A, making of a private copy of the advertisement VC, pausing the private VC, and storing of the private VC and advertisement's memory pointer. Then, control is transferred to step 1202, and appropriate ones of steps 1202 through 1216 are iterated until step 1215 yields a NO result. Upon step 1215 yielding a NO result, step 1217 tests to determine if the advertisement has completed playing. If the test result is YES control is transferred to step 1218. If the test result in step 1217 is NO, control is transferred to step, and appropriate ones of steps 1215 and 1216 and 1202 through 1217 are iterated until step 1217 yields a YES result. Thereupon, step 1218 tests to determine if WPTR(j)=RTPR(j), for any j. If the test result is YES, control is transferred to step 1219. If the test result in step 1218 is NO, control is returned to step 1215 and steps 1215 and 1216 and 1202 through 1218 are iterated until step 1218 yields a YES result. Upon step 1219 yielding a YES result control is transferred to step 1219. Step 1219 causes setting P/A=PROGRAM, pausing playing the current advertisement and, concurrently, causing the resumption of playing all broadcast video programs. Additionally, step 1219 causes the adding of a next advertisement to video server 101 play list, but in the paused state. Thereafter, control is returned to step 1211 and appropriate ones of steps 1211 and 1212 and 1202 through 1219 are iterated. This iteration process continues.

## Claims

1. Apparatus (106) for use at a prescribed local location to control the provision of video channels for supplying video programs and advertisements from a source (101) at a remote location to one or more television sets (107-1 through 107-N) at the prescribed local location, the apparatus being CHARACTERIZED BY
at least one first means (401) associated with at least one television set and being adapted to receive control messages associated with said at least one television set;
means (402) supplied with said received control messages and being adapted to generate video channel selection messages including a subscriber identification representation that indicates the advertisement service subscribed to by the subscriber;
means (402) for transmitting said video channel selection messages toward said remote source; and
at least one second means (403-1 through 403-M or 601-1 through 601-M) programmed for receiving video channels including said video programs and advertisements transmitted from said source in response to said transmitted video channel selection messages and for supplying as an output a video channel carrying interleaved video program signals and advertisements on said selected channel.

2. Apparatus as defined in claim 1 CHARACTERIZED IN THAT said channel selection message includes a representation indicating that said channel number being received cannot be changed during intervals that said video advertisements are being received.

3. Apparatus as defined in claim 1 CHARACTERIZED BY means (603) adapted to transmit a control message to a remote control unit associated with said television set indicating that said video channel number cannot be changed during interval that video advertisement signals are being received.

4. Apparatus as defined in claim 1 CHARACTERIZED BY means (402) adapted to store a representation of whether a selected prescribed video program or a particular advertisement is being played, and said prescribed video program being one of a prescribed group of video programs associated with said advertisement to be played.

5. Apparatus as defined in claim 1 CHARACTERIZED IN THAT each of said control messages includes at least a first field for containing said subscriber identification representation and a second field for containing a selected channel number, and means (402) adapted to assign said at least one second means (403-1 through 403-M or 601-1 through 601-M) to said selected channel number in said control message.

6. Apparatus as defined in claim 5 CHARACTERIZED IN THAT said at least one second means (403-1 through 403-M or 601-1 through 601-M) includes at least one means (404) adapted to store a channel representation associated with said selected channel number and an advertisement representation associated with one or more advertisements to be received, and said at least second means includes means (405) responsive to said stored video channel representation and advertisement representation and being adapted to filter from a received digital signal compressed video signals carried by said channel number and compressed advertisement video signals, means (406) adapted to decode said compressed digital video signals and said compressed digital advertisement signals to generate an analog video signal version of said video program signal and an analog video signal version of said one or more video advertisements, means (407) adapted to encode the analog video signals into NSTC video signal form and means for converting the frequency of the NSTC video signal to a prescribed video channel frequency.

7. Apparatus as defined in claim 6 wherein said selected channel carrying said compressed digital video signals is supplied in asynchronous transfer mode (ATM) cells in an ATM virtual circuit (VC) assigned to the selected channel number on which video programs are to be received and said compressed digital video advertisement signals are supplied in asynchronous transfer mode (ATM) cells in an ATM virtual circuit (VC) assigned to the video advertisements to be supplied, and wherein said at least one second means further includes means (405) supplied with the VCs assigned to the video program unit and being adapted to filter out the assigned VC from said video program signals and the assigned VC for said video advertisement signals from an incoming ATM signal.

8. Apparatus as defined in claim 7 CHARACTERIZED BY a plurality of said first means (401) associated with at least a prescribed number of said television sets (107-1 through 107-N) and being adapted to receive control messages associated with said at least prescribed number of television sets, a plurality of said second means (403-1 through 403-M or 601-1 through 601-M) adapted to receive video channels transmitted from said source in response to said control signals associated with said prescribed number of television sets and means (409) adapted to combine said received video channels from each of said plurality of video program units, a resulting combined video channel signal to be supplied as an output to said plurality of television sets.

9. A method for use at a prescribed local location to control the provision of video channels for supplying video programs and advertisements from a source at a remote location to one or more television sets at the prescribed local location, the method being CHARACTERIZED BY
receiving (via 401) control messages associated with said at least one television set;
in response to said received control messages, generating (via 402) video channel selection messages including a subscriber identification representation that indicates the advertisement service subscribed to by the subscriber;
transmitting (via 402) said video channel selection messages toward said remote source; and
receiving (via 403-1 through 403-M or 601-1 through 601-M) video channels including said video programs and advertisements transmitted from said source in response to said transmitted video channel selection messages and for supplying as an output a video channel carrying interleaved video program signals and advertisements on said selected channel.

10. Apparatus for use in a video server (101) at a remote location for supplying video channels including video program signals and video advertisement signals, the apparatus being CHARACTERIZED BY
means (201, 302) adapted to store video program signals and video advertisement signals;
means (202) responsive to received video channel selection messages and being adapted to control said means (201, 302) adapted to store to provide video program signals and prescribed video advertisement signals;
means (201, 202) adapted to insert said provided video advertisement signals into prescribed intervals of said video program signals to be transported as a video signal on a selected video channel; and
means (300, 314-1 through 314-X) adapted to supply an output video signal on said selected video channel.

11. Apparatus as defined in claims 10 CHARACTERIZED IN THAT said received channel selection message includes a representation indicating that said channel number to be supplied as an output cannot be changed during intervals that said video advertisement signals are being inserted into said video program signals.

12. Apparatus as defined in claims 10 CHARACTERIZED IN THAT said means (201, 202) adapted to control controls insertion of said video advertisement signals so that they are inserted into said prescribed intervals of all video program signals to be transported on all selected video channels.

13. Apparatus as defined in claims 10 CHARACTERIZED BY means (201, 202) adapted to controllably inhibit transmission of said video program signals and/or said video advertisement signals.

14. Apparatus as defined in claim 12 CHARACTERIZED BY said means (202) adapted to control, in response to a change of video channel message to a new channel, being adapted to control said means adapted to insert to insert said video advertisement signal in a program to be transported by said new channel.

15. Apparatus as defined in claims 10 CHARACTERIZED BY a plurality of encoders (203-1 through 203-Y) adapted to encode video program signals and video advertisement signals in digital form for storage in said storage means (201, 302).

16. Apparatus as defined in claim 15 CHARACTERIZED BY said encoders being adapted to encode said video program signals and said video advertisement signals in a compressed digital form.

17. Apparatus as defined in claim 16 CHARACTERIZED BY said selected channel carrying said compressed digital video signals being supplied as an output in asynchronous transfer mode (ATM) cells in an ATM virtual circuit (VC) assigned to the selected channel number on which video programs are to be received and said compressed digital video advertisement signals are suppiied as an output in asynchronous transfer mode (ATM) cells in an ATM virtual circuit (VC) assigned to the video advertisements to be supplied.

18. A method for use in a video server (101) at a remote location for supplying video channels including video program signals and video advertisement signals, the method being CHARACTERIZED BY
storing (via 201, 302) video program signals and video advertisement signals;
in response to received video channel selection messages, controllably supplying (via 202) from storage (302) video program signals and prescribed video advertisement signals;
controllably inserting (via 201, 202) said supplied video advertisement signals into prescribed intervals of said video program signals to be transported as a video signal on a selected video channel; and
supplying (via 300, 314-1 through 314-X) as an output video signal on said selected video channel.

19. Apparatus comprising a video controller (106) at a local location and a video server (101) at a remote location, said video controller being apparatus as defined in any of claims 1 through 8 and said video server being apparatus as defined in any of claims 9 through 17.

20. A method comprising carrying out a method as defined in claim 9 in a video controller (106) at a local location and a method as claimed in claim 18 in a video server (101) located at a remote location.
